# EUROPEAN PATENT SPECIFICATION

(11) **EP 3 711 467 B1**
(45) Date of publication and mention of the grant of the patent: **11.05.2022**
(21) Application number: 20164204.8
(22) Date of filing: 19.03.2020
(51) Int. Cl.: A01C 5/04, A01C 11/02, A01G 13/02

(54) **SOIL COVERING AND PLANTING APPARATUS**
BODENABDECKUNGS- UND BEPFLANZUNGSVORRICHTUNG
APPAREIL DE COUVERTURE DE SOL ET DE PLANTATION

(30) Priority: 19.03.2019 NZ 19751846
(43) Date of publication of application: 23.09.2020
(73) Proprietor: CGechen Limited, Hamilton 3283 (NZ)
(72) Inventor: CHEN, Guohua, 3283 Tamahere (NZ)
(74) Representative: Schulz Junghans Patentanwälte PartGmbB

(56) References cited:
- EP-A2- 0 153 893
- DE-C1- 4 210 573
- US-A- 3 204 589
- US-A- 4 706 864
- US-B1- 7 476 059

## Description

### Field of the Invention

This invention relates to improvements in respect of a soil bed covering and planting apparatus. In various preferred embodiments the invention may be used in a raised ridge soil bed planting application to apply and secure a layer of weed deterring cover material over a soil bed, then to subsequently pierce this cover material and deposit a plant into the soil below.

### Background of the Invention

A variety of agricultural crops are grown using raised ridge soil beds where soil is mounted into a long ridge with a crop planted at the top of this ridge. This approach is useful when bush or small tree crops are grown over several years, providing access for workers and machinery between the ridges formed.

As with all forms of agriculture, crops planted on such ridges can have their productivity impacted by weed growth. Although herbicides can be used, these compounds are disliked by consumers and will add to the production costs of the crop.

One of approach used to minimise the use of herbicides is through the application of a layer of weed deterrent cover material over the length and width of a raised ridge soil bed. For example sheets of material formed by woven plastic fibres - known generally as 'weed mat' - are commonly used in these applications. These sheets of cover material prevent windborne seeds from accessing the soil bed and existing weed seeds in the soil bed from germinating and accessing sunlight. Generally the thicker the sheet of weed cover material used, more effective this material is in deterring the growth of weeds.

However on large-scale commercial plantings the installation and use of weed deterrent cover materials can be particularly laborious and time-consuming.

The material must be laid flat over a projecting mound of soil bed over long distances and can be secured in place by a large number of pins or staples which tension the surface of the material. Furthermore, as the thickness of the cover material increases it becomes increasingly difficult to drive pins or staples through its surface to secure it in place. In various applications there may also be a need to adjust the distance between adjacent pins or staples during installation, adding a further complication when this process is to be automated. Due to these complications it is common for such pins or staples not to be used, and instead for soil to be simply piled onto the edges of the cover material.

In a number of applications it is also preferable to deploy a water distribution irrigation conduit with the cover material, with best results being achieved when this conduit is sandwiched between the cover material and the soil bed. However this requirement again complicates the actions required to deploy and secure the cover material.

After an area to be cultivation is covered by a weed deterrent material sheet the crop to be raised will still need to be planted, and holes must be formed in the cover material to allow plants to be introduced into the soil bed. Again this planting operation requires a further action of cutting or otherwise forming planting holes, which can be increasingly difficult and require increasing levels of force as the thickness of the cover material used increases. Cutting planting holes can be particularly difficult when the edges of the cover material are only secured by a layer of soil deposited on the edges of the material. In these instances the force applied to make a cut in the cover material can instead result in the cover deforming instead of being cut. Relevant prior art is EP 0153893 A2, US 3204589 A, DE 4210573 C1, US 4706864 A and US 7476059 B1.

In these applications it is also of advantage to perform the operations required from a continuously moving platform. Workers and the machines or tools they operate can be moved over a sheet of weed deterrent material while making holes in the sheet to receive seedling plants. However any tool used to cut or pierce the sheet will be in motion relative to the ground, dragging this tool along the length of the sheet when it is moved down into contact to the sheet. This causes problems by ripping or cutting a much larger or longer hole in the sheet that is necessary to receive a seedling plant - leaving a gap where weeds can also grow up through the sheet and compete with the seedling plant.

It would therefore be of advantage to have an improved soil bed covering and planting apparatus apparatus which addressed any or all the above issues, or at least that provided an alternative choice to the prior art. In particular it would be of advantage to have an apparatus which could at least partially automate the steps of applying and securing a sheet of weed cover material to a soil bed. It would also be of advantage to have improvements over the prior art which at least partially automated the installation of a water distribution conduit of an irrigation system between a soil bed and a sheet of weed cover material. An improved apparatus which allowed for the formation of planting holes in a sheet of cover material deployed and secured by the same apparatus, and/or which also could deliver plants into such holes in at least a semi-autonomous matter would also be of advantage over the prior art. It would also be of advantage to have improvements over the prior art which minimised the size of planting holes made in a sheet of weed cover material by an apparatus mounted to a continuously moving platform.

### Disclosure of the Invention

According to the present invention there is provided a soil bed covering and planting apparatus adapted to be carried along the length of a soil bed by a conveyer vehicle, the apparatus including
a cover material reel configured to retain and supply a sheet of cover material, and
a compaction roller configured to feed cover material supplied by the cover material reel over a soil bed and being configured to press the cover material on to the soil bed, and
two spike hammers positioned adjacent to and at opposite sides of the compaction roller, each being configured to drive at least one spike through the cover material and into the soil bed to secure the cover material to the soil bed, and
an actuation structure associated with each spike hammer configured to urge the spike hammer against the at least one spike, and
a piercing assembly arranged to form a series of holes in the sheet of cover material, the piercing assembly being engaged with a drive structure which is configured to reciprocate the piercing assembly to drive one end of the piercing assembly through the sheet of cover material.

According to another aspect of the present invention there is provided a soil bed covering and planting apparatus wherein the piercing assembly defines a hollow bore configured to receive at least one plant to be planted in the soil bed.

According to a further aspect of the present invention there is provided a soil bed covering and planting apparatus wherein the end of the piercing assembly driven through the cover material defines a pair of jaws movable between an open configuration and a closed configuration, wherein in the closed configuration the jaws define a piercing blade and in the open configuration the jaws define a delivery port which allows a plant located in the hollow bore to exit the bore and be delivered to the soil bed through a hole formed in the cover material by the piercing assembly.

According to a further aspect of the present invention there is provided a soil bed covering and planting apparatus wherein the compaction roller defines a ground contact profile complimentary to the profile of the soil bed being prepared.

According to another aspect of the present invention there is provided a soil bed covering and planting apparatus wherein each actuation structure associated with a spike hammer includes a trigger mechanism which controls the placement distance between spikes used to secure one edge of the cover material to the soil bed.

According to a further aspect of the present invention there is provided a soil bed covering and planting apparatus which includes an irrigation conduit reel configured to retain and supply a length of irrigation conduit over the soil bed and under the cover material pressed into the soil bed.

According to another aspect of the present invention there is provided a soil bed covering and planting apparatus wherein the irrigation conduit is fed out on top of the soil bed offset from the centre of the width of the sheet of cover material.

The present invention provides a soil bed covering and planting apparatus configured to apply and secure a sheet of weed deterrent cover material to a soil bed. These types of cover materials are well known and commonly used in agricultural applications and can be formed from a variety of materials. One commonly used form of cover material is known as 'weed mat' and is formed by a woven fabric of plastic fibres.

Reference in general will predominantly be made to the invention being used to deploy and secure woven plastic fibre weed mat materials. However those skilled in the art will appreciate that the invention may also operate in conjunction with other forms of weed deterrent cover materials in other embodiments.

Furthermore in various examples not being part of the invention, such examples need not necessarily be configured to only deploy and secure sheets of cover material over a soil bed. For example in various embodiments the apparatus provided by the invention may also include additional subsystems which facilitate deploying irrigation conduit, forming planting holes, delivering plants into planting holes, and/or forming a ridged soil bed prior to deploying a sheet of cover material. Those skilled in the art appreciate that combinations of one or more of these subsystems may be used in combination with the invention's cover material installation components.

The apparatus provided by the invention is arranged to be carried by a conveyer vehicle over the length of a soil bed as the invention operates. In some embodiments this conveyor vehicle may be utilised to power or drive various components of the invention, whereas in other embodiments this vehicle may be utilised just to convey the various parts of the invention along a soil bed.

Reference throughout this specification will in general be made to the invention utilising a conveyor vehicle in the form of tractor, preferably with a power output of at least 200 horsepower. A tractor can move freely over uneven and wet ground and has a capacity to convey heavy loads. Again however those skilled in the art will appreciate that other types of conveyor vehicle, or potentially custom-built vehicle systems may also be used in conjunction with the present invention in other embodiments.

In some preferred embodiments the soil bed covering and planting apparatus may also include a ridging structure. This ridging structure can be employed to form a raised ridge of soil from a relatively flat area as the conveyor vehicle moves along the length of a soil bed. For example in some embodiments a ridging structure may incorporate at least two substantially vertically orientated soil collection blades which are angled towards an open apex region. The structure may be deployed to define an open leading throat where these blades collect and channel soil to the apex region as the vehicle moves forward along the soil bed.

The apparatus provided by the invention includes a cover material reel which is arranged to retain and also supply a sheet of weed cover material. A sheet of cover material may be wound around this reel, with rotation of the reel winding out the length of the sheet as the conveyor vehicle moves forward along a soil bed. Those skilled in the art will appreciate that rotation of the cover material reel may be induced through the forward motion of the conveyor vehicle in some embodiments, whereas in other embodiments an independent powered rotation system may be used to drive the rotation of this reel.

The apparatus provided by the invention includes a compaction roller arranged to feed out the sheet of cover material over the soil bed. The compaction roller is supplied with cover material by the cover material reel, and in some embodiments one or more spreading or translation rollers may be interposed between these elements to deliver the cover material to the compaction roller. This compaction roller is arranged to deliver cover material into the soil bed and may also compress or shape the profile of the soil bed as it rotates. In embodiments where the invention also incorporates a ridging structure the compaction roller may compress the relatively loose mounded soil ridge formed by this component.

In a preferred embodiment rotation of the compaction roller may be induced by the motion of the conveyor vehicle as it moves along the length of the soil bed. However in alternative embodiments a separate independent powered rotation system may be provided for the compaction roller if required.

The compaction roller defines a ground contact profile which is complementary to the profile or shape of the soil bed to be prepared. For example, when the invention is to be used with a flat soil bed the compaction roller may have a substantially cylindrical form which presents a regular or level ground contract profile across the surface of the roller. However in preferred embodiments when the invention is used with a ridged soil bed the compaction roller may have a cylindrical form with a tapered central waist which complements the shape of the ridged soil bed. In such embodiments the ground contact profile defined by the compaction roller can also act to shape and compact the soil used to form a ridged soil bed.

In some preferred embodiments the invention may also include an irrigation conduit reel which is arranged to retain and supply a length of irrigation conduit. For example, in some embodiments it may be desirable to deploy a length of T-tape formed from a conduit which defines a large number of water outlet holes along its length. Water pumped through this T-tape conduit will act to irrigate the adjacent soil bed.

When provided with the invention an irrigation conduit reel can be positioned on the apparatus adjacent to the compaction roller so that irrigation conduit will be delivered to the soil bed ahead of the cover material being deployed. The following compaction roller can then act to cover the conduit with cover material and then compress it into the soil bed.

Those skilled in the art will appreciate that in preferred embodiments an irrigation conduit reel may be induced to rotate and deploy irrigation conduit through the motion of the conveyor vehicle. However in other embodiments a separate powered rotation system may be provided if required.

The apparatus provided by the invention also includes two spike hammers. Each of the spike hammers is configured to drive a form of spike or projection through the cover material deployed by the compaction roller to secure the material in place over the soil bed. Spike hammers can therefore be deployed on either side of the compaction roller at positions where the spike hammers travel over cover material as the conveyor vehicle moves along the soil bed. In this arrangement the two opposed spike hammers can therefore be operated to secure the sides of the sheet of cover material in place over a soil bed as the cover material is deployed by the compaction roller.

Those skilled in the art will appreciate that the spikes used to secure the cover material may have different configurations or forms in various embodiments. For example staples defining two vertically orientated spikes joined by horizontal head may be driven through the cover material by a spike hammer in some embodiments. In other embodiments spikes formed by pins terminating in a horizontally orientated head may be driven through the cover material.

Reference throughout this specification will predominantly be made to a spike hammer provided by the invention being configured to drive a staple forming two separate projecting spikes through a cover material. Those skilled in the art will however appreciate that the spike hammers provided by the invention may also be used with other forms of spikes in alternative embodiments.

The apparatus provided by the invention includes an actuation structure associated with each spike hammer which is configured to urge a spike hammer against a spike. This actuation structure can be used to apply a driving force through the spike hammer and into a spike to push it through the cover material and into a soil bed. In various embodiments such an actuation structure can operate to provide the associated spike hammer with a reciprocating motion, forcefully driving the hammer downwards each time a spike is to be driven through the cover material.

In a preferred embodiment a spike hammer's actuation structure may be formed from a pneumatic drive system where the spike hammer forms at least part of a pneumatic ram assembly. Air pressure can then be used to forcefully drive the hammer ram into a spike and then lift the hammer back to a ready position after this action.

Reference in general throughout this specification will also be made to a spike hammer's actuation structure being formed from a pneumatic drive system with a spike hammer being formed from or being connected to a pneumatic ram assembly. However those skilled in the art will appreciate that a hydraulic drive system may function equally well to provide an actuation structure for a spike hammer, as could equivalent electrical drive systems.

Preferably each actuation structure engaged with a spike hammer includes a trigger mechanism which controls the placement distance between spikes used to secure one edge of the cover material to the soil bed. These trigger mechanisms can be used to trigger the application of a driving force by the actuation structure to a spike hammer at particular times or when the conveyor vehicle has travelled a certain distance.

For example in a preferred embodiment a trigger mechanism may be formed by a ground travelling wheel which is rotated by the progress of the conveyor vehicle. The completion of a number of revolutions, or rotation through a set arc of degrees by the ground travelling wheel may trigger the operation of an associated actuation structure.

In various embodiments a ground travelling wheel may, for example, be connected to a gear assembly connected through to a cam mechanism which repetitively trips a trigger switch operating an actuation structure. The configuration of the gears used can therefore be designed to control the distance travelled by the conveyor vehicle between successive triggers of a spike hammer's actuation structure. Furthermore this distance may also be adjusted in some embodiments by replacing various gears of the gear assembly.

The apparatus provided by the invention includes a piercing assembly configured to form a series of planting holes in the cover material deployed and secured by other components of the invention. This piercing assembly may be operated by a drive structure which moves at least a portion of the piercing assembly in a reciprocal manner so that one end of the assembly is driven through the sheet of cover material to form a planting hole in the underlying soil bed. For example in one embodiment a drive structure for a piercing assembly may include a pneumatic ram which acts of a hammer element configured to reciprocate within a guide channel. Alternatively, in yet other embodiments similar forms of drive mechanism may be used which can rapidity drive a hammer element through a sheet of weed cover material.

In a further preferred embodiment a piercing assembly may be formed from or incorporates elongate shaft which defines a hollow interior bore. This interior bore may be formed with dimensions large enough to receive a plant to be deposited into a planting hole formed when the piercing assembly pierces the overlaying cover material. For example in some embodiments such a piercing assembly may define an entry port on the side wall or at the top of the hollow bore through which a plant can be introduced.

Those skilled in the art will appreciate that action of gravity and/or the impact of the lower end of the piercing assembly with the cover material and soil bed will cause a plant introduced into the hollow bore to move down to the bottom of the bore. This will eventually result in a plant introduced into the hollow bore being located close to where the piercing assembly contacts the soil bed.

In a further preferred embodiment the end of the piercing assembly driven through the cover material may define a pair of jaws which can be moved between an open configuration and a closed configuration. When placed in this open configuration the jaws can define a delivery port which gives access to the hollow interior bore and can allow a plant inside this bore to be delivered to the soil bed. When placed in the closed configuration these jaws may define a piercing blade from their projecting leading edges which will be the first surfaces to contact the sheet of cover material. It is envisioned that the opening and closing of the pair of jaws will therefore be synchronised with the reciprocal motion of the main shaft of the piercing assembly, so that the doors are closed when the assembly is used to form a planting hole, and then opened to deliver a plant after the hole is formed.

In a preferred embodiment a drive system associated with the piercing assembly may include a trigger mechanism. This trigger mechanism can be used to control how frequently the piercing assembly operates and therefore how closely spaced plantings will be made in the soil bed. For example in one potential embodiment such a trigger mechanism may incorporate a ground following wheel incorporating a number of magnets mounted on its side which are positioned to rotate past a magnetic sensor. This magnetic sensor can generate a signal based on the passage of a magnet and hence provide an indication of the speed or distance being travelled by the apparatus to interment trigger the operation of the piercing assembly.

In a preferred embodiment a lateral adjustment mechanism may be provided as an intermediary component used to engage the piercing assembly with the support frame. For example, in one embodiment the piercing assembly and its associated drive may be cantilevered from a threaded shaft and associated drive system. Forward and backwards operation of this drive system can result in lateral translation in the cantilevered piercing assembly. This feature therefore allows for precise adjustment of the relative position of the piercing assembly to the left and right on the support frame to adjust for deviations in the soil bed being traversed by the apparatus.

In a preferred embodiment a resilient tilt mounting may be used as an intermediary component to engage the piercing assembly with the support frame. For example in some embodiments this resilient tilt mounting may suspend the piercing assembly from the support frame. Preferably this form of mounting may include a pivot connection between the piercing assembly and the support frame or any additional intermediary components engage with the support frame. In such embodiments the resilient tilt mounting may also include a resilient return mechanism such as a return spring which can apply force which urges the piercing assembly into a substantially vertical orientation.

This feature of the invention may be used to minimize the length of a cut formed in the surface of the cover material as the apparatus moves forward along the length of a soil bed. The pivoting connection provided to the piercing assembly can allow it to tilt as it is withdrawn from the soil after a planting operation, instead of being dragged along the ground as the apparatus moves forward. The resilient return mechanism can then be used to return the piercing assembly to a substantially vertical orientation ready for the next planting operation.

In a preferred embodiment a height adjustment mechanism may be used as an intermediary component to engage the piercing assembly with the support frame. The height adjustment mechanism may - for example - incorporate a further pneumatic ram or similar assembly which lifts or lowers the piercing assembly relative to the support frame. This feature therefore allows for precise adjustment of the relative height of the piercing assembly on the support frame to adjust for deviations in height of the soil bed being traversed by the apparatus. This feature can also be used to control the depth of the planting hole formed by the operation of the piercing assembly.

In a preferred embodiment the apparatus provided by the invention may also include an air pump and at least one pneumatic accumulator tank. In such embodiments various components of the apparatus may be pneumatically driven, with the air pump and accumulator tank or tanks being used to supply high-pressure air to these components. In such embodiments the air pump can be used to provide a constant supply of pressurised air, and the tank can be accumulate air at high pressures in the tank to await intermittent use by pneumatic systems.

In a further preferred embodiment a plurality of pneumatic accumulator tanks may be provided in accordance with the invention. In such embodiments the increased numbers of accumulator tanks are able to provide consistent or stable air pressure to the pneumatic systems provide in accordance with the invention.

The present invention may provide many potential advantages over the prior art.

The present invention may provide an improved soil covering and planting apparatus which has the ability to at least partially automate the installation of weed deterrent cover materials. This apparatus may also include a number of additional subsystems and further components in various embodiments to form a mound or ridge of soil for a soil bed prior to the application of weed cover materials, apply an irrigation conduit underneath a layer of weed cover material, and/or cut and form planting holes and potentially deliver plants into these holes. Those skilled in the art will appreciate that these various components of the invention may all be combined in some embodiments, or used in other combinations in other embodiments.

The staple hammers provided by the invention ensure that the edges of the cover material can be anchored in place securely and will also tension the surface of the cover material sheet. This ensures that the cover material can be cut reliability and quickly as it will resist the cutting action of the piercing assembly and not deform around it.

The various drive systems utilised by the invention provide high impulse forces which impart rapid motion to hammer elements and/or piercing assembly jaws. These systems allow the cover material to be anchored and for piercing and planting operations to be completed rapidly as the apparatus moves forward in use. Furthermore, the high impulse forces applied aid significantly in the cutting, piercing or otherwise penetration of relatively thick weed cover materials.

In various additional embodiments the invention may also incorporate intermediate mounting systems for a piercing assembly which allow for vertical and horizontal positioning adjustments, as well as for tilting of such assemblies after the completion of planting operations to minimise the size of the hole formed in the cover material.

### Brief description of the drawings

Additional and further aspects of the present invention will be apparent to the reader from the following description of embodiments, given in by way of example only, with reference to the accompanying drawings in which:
- Figure 1 shows a side view of a soil bed preparation apparatus as provided in accordance with one embodiment of the invention, and
- Figure 2 shows a detailed view of the ridging structure integrated in the apparatus of figure 1,
- Figures 3a, 3b, 3c, 3d and 3e show a number of perspective views of the cover reel, compaction roller and irrigation conduit reel provided in the apparatus shown with respect figure 1,
- Figure 4 shows a view of one of the two spike hammers integrated into the apparatus of figure 1,
- Figures 5 shows components of the trigger mechanism which operates one of the spike hammers integrated provided the apparatus of figure 1,
- Figure 6 shows a view of the piercing assembly provided in the apparatus of figure 1,
- Figures 7a, 7b and 7c show the range of motion and configuration of the piercing assembly of figure 6 during various stages of operation,
- Figures 8a, 8b and 8c show the motion of the side mounted pneumatic rams and lever arms of figure 6 as the jaws moved from their closed to open positions,
- Figure 9 shows components of the trigger mechanism which triggers the actions of the piercing assembly shown with respect to figures 7b and 7c,
- Figure 10 shows a side schematic view of a soil planting and covering apparatus provided in accordance with an alternative embodiment to that shown with respect to figures 1 to 9,
- Figure 11 shows an end view of the piercing assembly illustrated with respect to figure 10,
- Figure 12 shows a side view of the piercing assembly illustrated with respect to figures 10 and 11,
- Figure 13 shows perspective and side views of the drive structure which moves the piercing assembly illustrated with respect to figures 11 and 12,
- Figures 14a through 14g illustrate the sequence of operational of movements performed by the piercing assembly of figures 11-13 relative to the rotation of a ground following wheel trigger mechanism,
- Figures 15a, 15b and 15c show front, side and top views of one of the spike hammers shown with respect to figure 10,
- Figure 16 shows components of a spike magazine drive system incorporated into the spike hammer shown with respect to figures 15a-15c,
- Figure 17 show an exploded schematic view of parts of the spike hammer illustrated in figures 15a-c, and
- Figures 18a through 18e illustrate the sequence of operational movements performed by the spike hammer of figures 15 through 17 relative to the rotation of a ground following wheel trigger mechanism.

Further aspects of the invention will become apparent from the following description of the invention which is given by way of example only of particular embodiments.

### Best modes for carrying out the invention

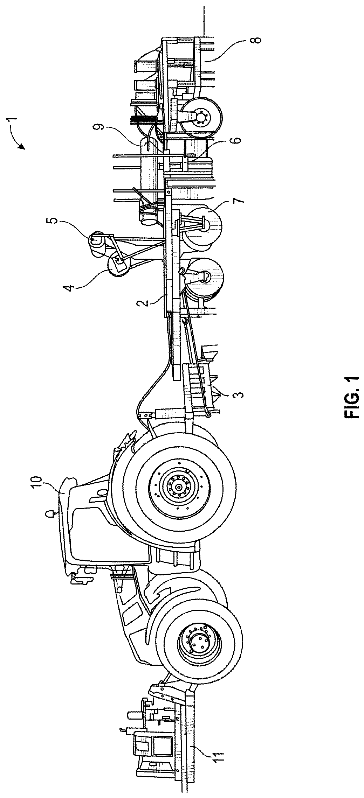

Figure 1 shows a side view of a soil covering and planting apparatus 1 as provided in accordance with a preferred embodiment of the invention.

In the embodiment shown the invention defines a main support frame 2 used to locate a ridging structure 3, irrigation conduit reel 4, cover material reel 5, a pair of spike hammers 6 and compaction roller 7, piercing assembly 8 and pneumatic accumulator tank 9. These components are mounted on the support frame 2 which is lifted and moved along the length of a soil bed by a conveyer vehicle tractor 10. The tractor is also used to lift and support an air pump 11 which supplies compressed air to the accumulator tank 9.

In the embodiment shown the apparatus 1 is configured to move along a flat area of soil. As it moves over the soil bed it forms a raised ridge through the action of the ridging structure, applies a length of irrigation conduit supplied by the irrigation conduit reel, and then covers the raised ridged bed with a sheet of weed deterrent cover material supplied by the cover material reel and pressed and pinned into place by the spike hammers and compaction roller. The piercing assembly mounted to the rear of the support frame then operates to cut a series of holes in the cover material at the top of the ridged soil bed and to deposit a plant into the hole formed under each cut.

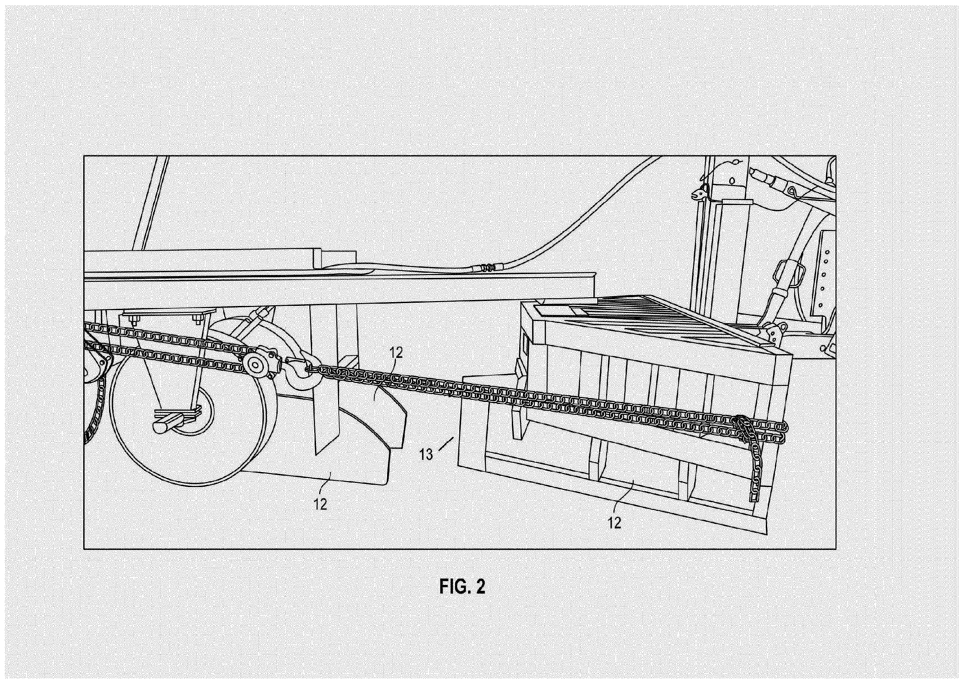

Figure 2 shows a detailed view of the ridging structure 3 integrated in the apparatus of figure 1. As can be seen from figure 2 this structure incorporates two sets of paired angled blades 12 which project upwards from the soil towards an open apex region 13 at the rear of the structure. The front of the structure defines an open leading throat which is used to collect soil from a wide span to be mounted into the ridged soil bed.

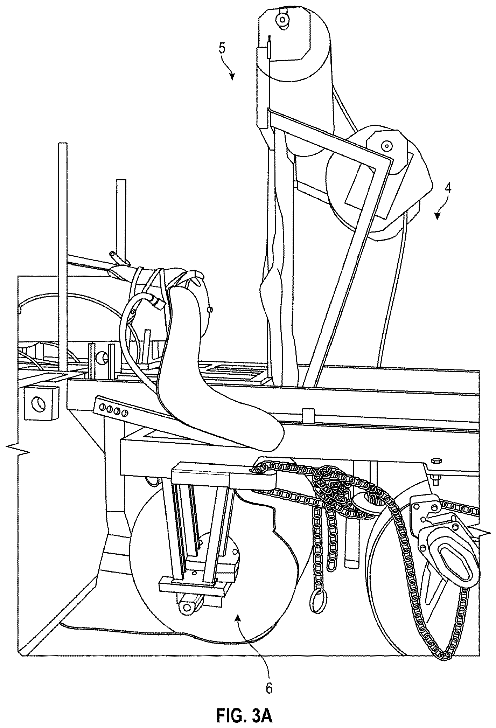

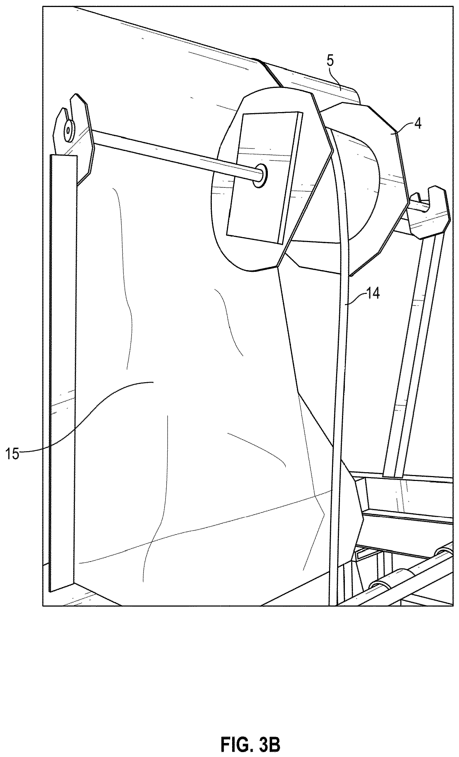

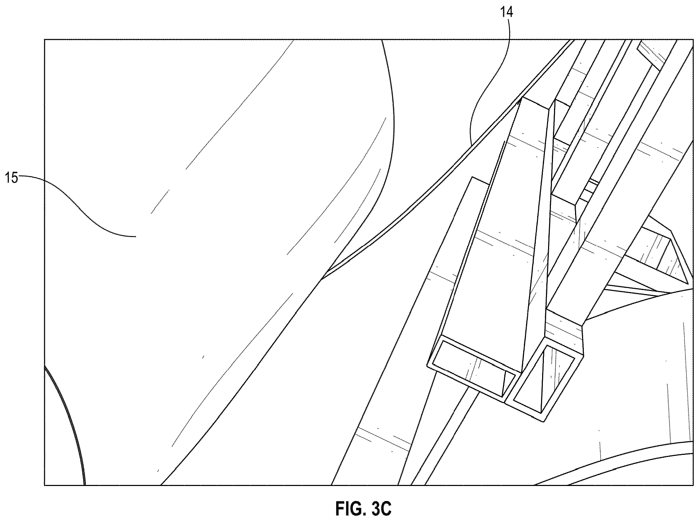

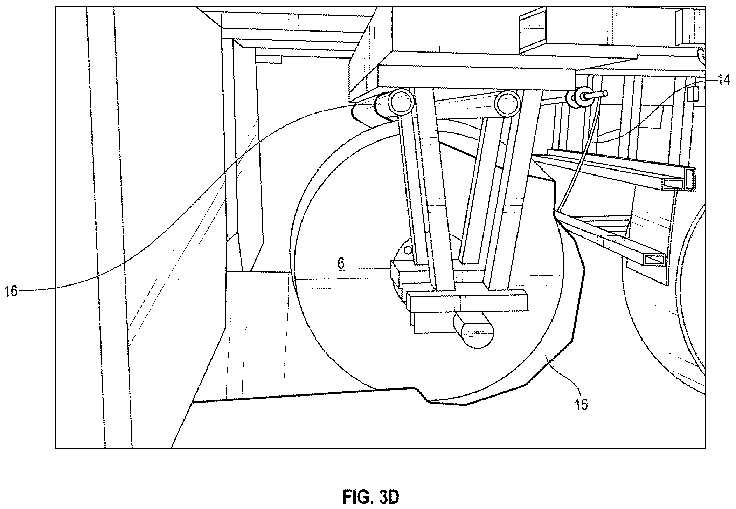

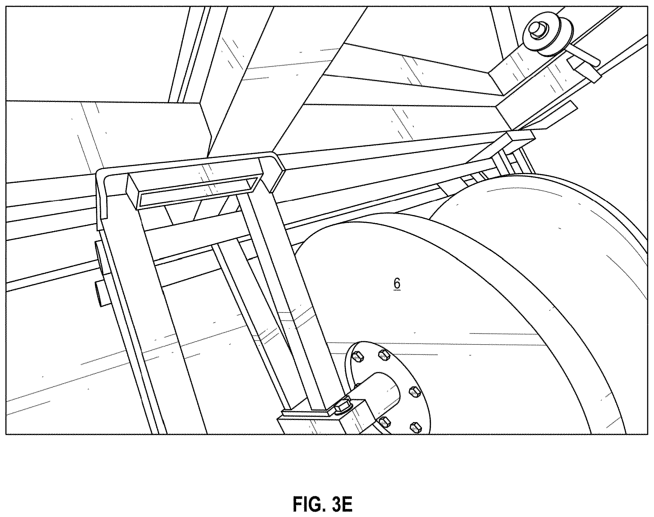

Figures 3a, 3b, 3c, 3d and 3e show a number of perspective views of the cover reel 5, compaction roller 6 and irrigation conduit reel 4 provided in the apparatus shown with respect figure 1. In the views shown the progress of the conveying tractor is moving in the direction of left to right. This collection of components is arranged so that the irrigation conduit reel 4 firstly deploys its conduit 14 directly onto the soil bed. The cover reel 5 then supplies a loose sheet of material 15 down to the compaction roller 6 by way of a series of intermediate spreading and tensioning rollers 16, as shown in figure 3d. The compaction roller 6 then compresses the irrigation conduit and cover material onto the soil bed, with a following of spike hammers (not shown) being used to turn to pin the edges of the cover material in place.

Figure 3e also shows a perspective view of the compaction roller 6, and illustrates how in this embodiment defines a ground contact profile which is complementary to the profile or shape of the soil bed to be prepared. The compaction roller has a cylindrical form with a tapered central waist which complements the shape of the ridged soil bed.

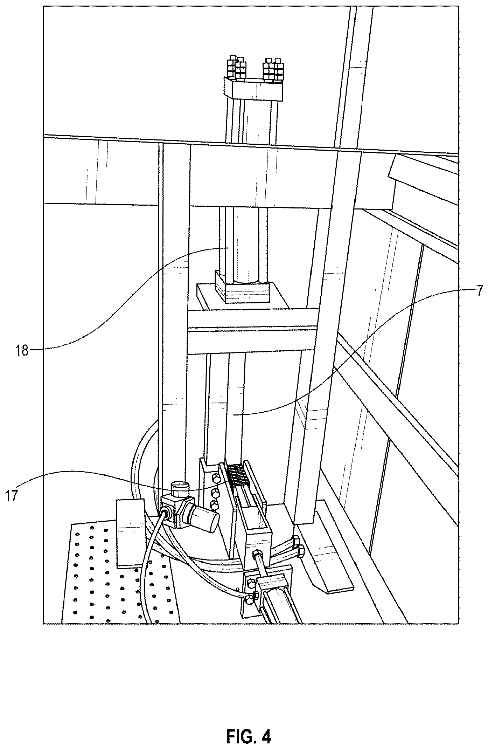

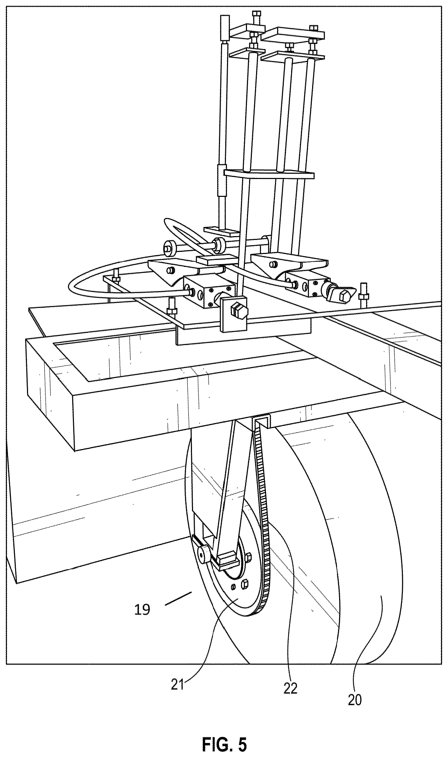

Figure 4 shows a view of one of the two spike hammers 7 integrated into the apparatus of figure 1. As can be seen from figure 5 an array of staple shaped spikes 17 are arranged on a track leading to the spike hammer 7. An operator urges the staples 17 towards and underneath the spike hammer as it is reciprocated up and down by a pneumatic ram based actuation system 18.

Figures 5 shows components of the trigger mechanism which operates one of the spike hammers 7 integrated provided the apparatus of figure 1.

Preferably each actuation structure 18 engaged with a spike hammer includes a trigger mechanism 19 which controls the placement distance between spikes used to secure one edge of the cover material to the soil bed. These trigger mechanisms can be used to trigger the application of a driving force by the actuation structure to a spike hammer at particular times or when the conveyor vehicle has travelled a certain distance.

In this embodiment the trigger mechanism 19 incorporates a ground travelling wheel 20 which is rotated by the progress of the tractor. This ground travelling wheel rotates a gear 21 connected via a drive chain 22 through to a cam mechanism (not shown) which repetitively trips a trigger switch (not shown) operating the associated spike hammer. The delay time between hammer triggers - and hence the distance between adjacent pins or staples - can be adjusted by changing the size of the gear mounted to the ground travelling wheel.

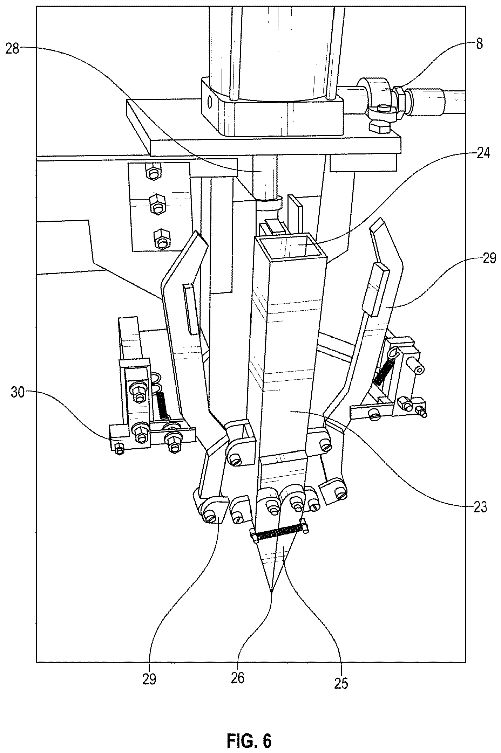

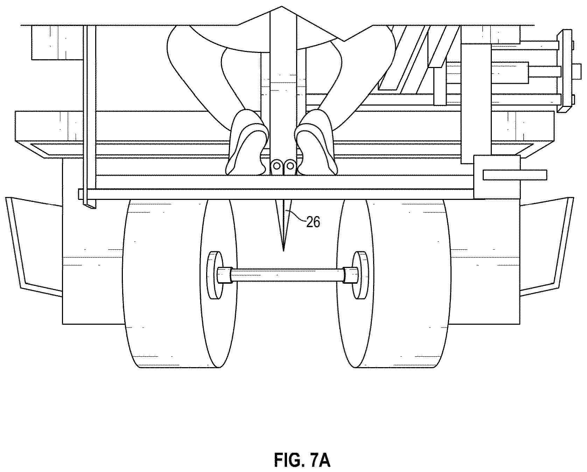

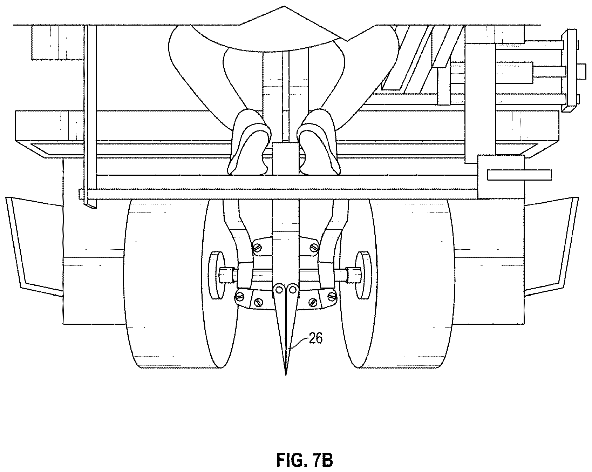

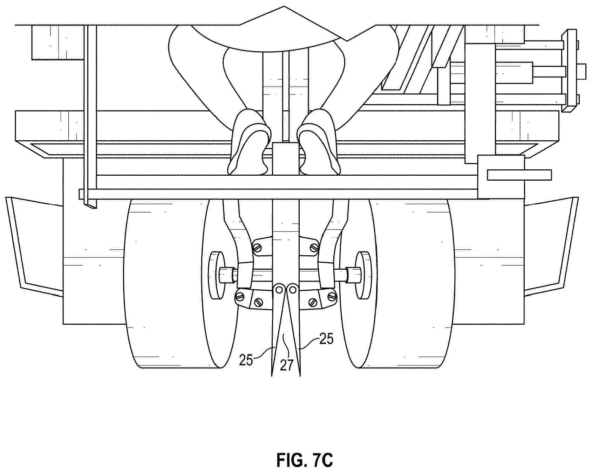

Figure 6 shows a view of the piercing assembly provided in the apparatus of figure 1. Figures 7a, 7b and 7c show the range of motion and configuration of the piercing assembly integrated into the apparatus of figure 1 during various stages of operation.

In the embodiment shown the piercing assembly incorporates an elongate shaft 23 which defines a hollow interior bore. The top of this shaft is open and defines an inlet port 24 which can receive plants into the hollow interior bore of the shaft. The opposite end of the assembly defines a pair of jaws 25, shown in a closed configuration in figures 7a and 7b, and in an open configuration in figure 7c. As can be seen from figures 7a and 7b the leading edges of these jaws are the first surfaces to contact the sheet of cover material and together define a piercing blade 26. As can be seen from figure 7c the same jaws placed in an open configuration define a delivery port 27 giving access to the hollow interior of the bore and allowing a plant to drop down into the soil bed exposed by the action of the piercing assembly.

Figure 6 shows in more detail components of the piercing assembly 8 which are used to move the shaft 23 up and down and to open and close the pair of jaws 25.

The shaft is connected to the end of a hydraulic ram system 28 which operates to reciprocate the shaft up and down, piercing the cover material and positioning the delivery port 27 adjacent to the underlying soil.

A series of lever arms 29 are connected to each jaw 25 located at the lower end of the shaft. An additional side mounted pneumatic ram 30 is provided for each jaw and linked to these lever arms, with the side rams being actuated in a timed manner to synchronise with the vertical reciprocal motion applied by hydraulic ram system 28.

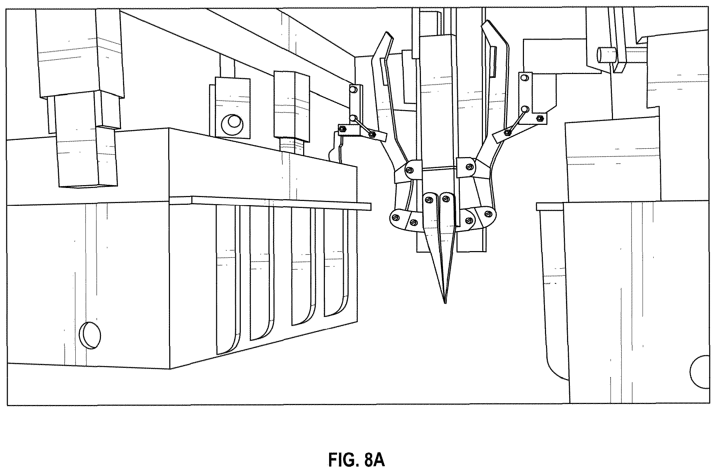

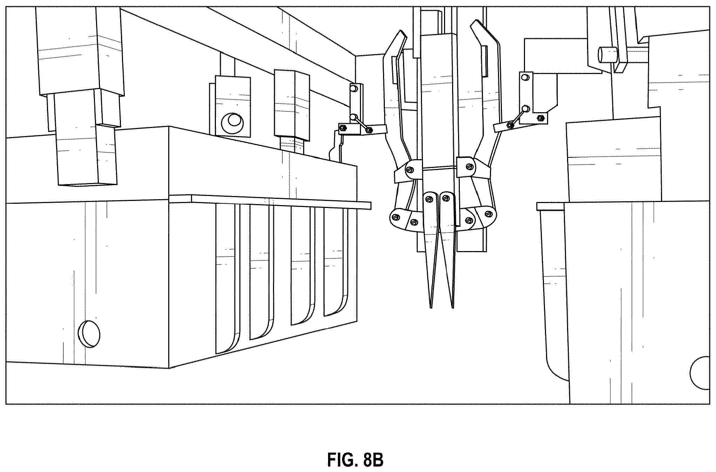

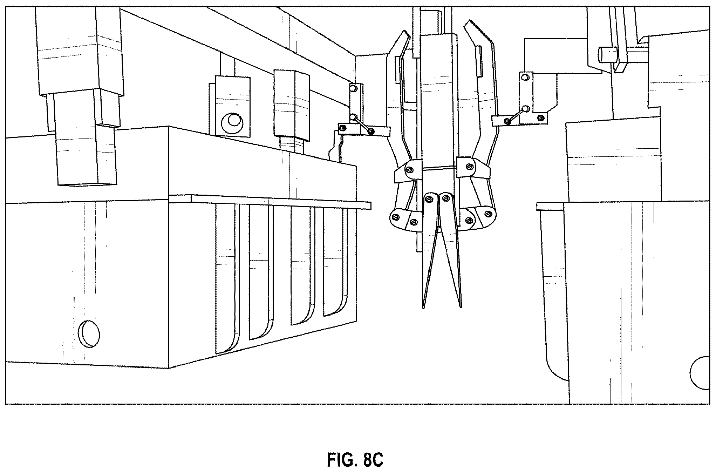

Figures 8a, 8b and 8c show the motion of the side mounted pneumatic rams and lever arms as the jaws moved from their close to open positions. As can be seen from these figures each side mounted ram can push the topmost lever arm towards the shaft to open the jaws and expose the delivery port. Motion of the side hydraulic ram in the opposite direction will act to close the jaws.

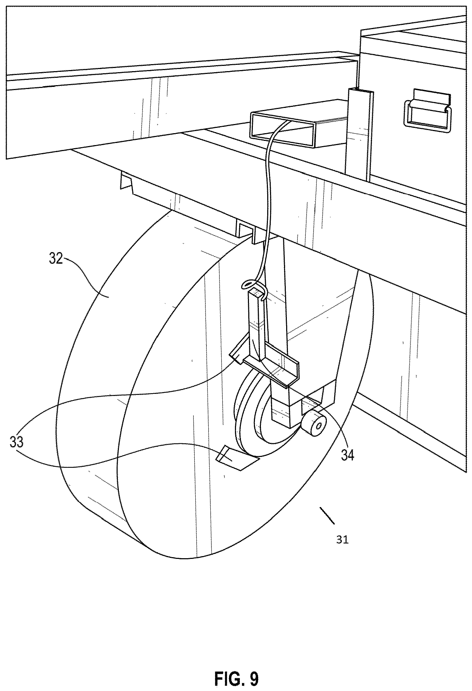

Figure 9 shows components of the trigger mechanism 31 which triggers the actions of the piercing assembly shown with respect to figures 7b and 7c. This component therefore controls the distance between each plant deposited by the piercing assembly. This trigger mechanism incorporates a ground travelling wheel 32 which is rotated by the progress of the tractor.

A series of magnets 33 are mounted on the side of the wheel 32 at the same distance from the centre of the wheel to align with a magnetic sensor 34 and associated trigger electronics. As the ground wheel rotates each of the sensors shown will move past the magnetic sensor to induce a trigger pulse in the associated electronic which is used to actuate the operation of the piercing mechanism 8.

In the embodiment shown the piercing mechanism is actuated every time a magnet passes the sensor. However the behaviour of this component can be modified in other embodiments by the addition of further magnets to the wheel and/or triggering of the piercing mechanism only after the passage of a set number of magnets has been detected.

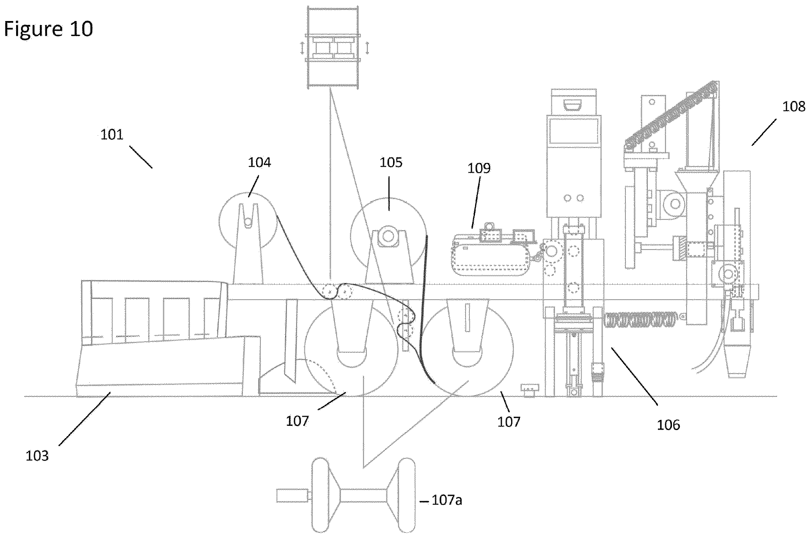

Figure 10 shows a side schematic view of a soil covering and planting apparatus 101 as provided in accordance with an alternative embodiment to that shown with respect to figures 1 to 9

Similarly with the embodiment shown with respect to figures 1 to 9 the apparatus 101 of figure 10 also incorporates a support frame 102 which is used to mount and support the various other components of the apparatus. A ridging structure 103 is mounted to the front or forward end of the support frame and forms the leading component of the apparatus when moved along a soil bed. This ridging structure 103 shapes a loose mound of soil which is then pressed together by a set of compaction rollers 107. The end insert view 107a shown illustrates how each compaction roller 107 defines a ground contact profile which is complimentary to the profile of the soil bed being prepared. In the embodiment shown each compaction roller has a cylindrical form with a tapered central waist which complements the shape of the ridged soil bed.

An irrigation conduit reel 104 is provided to deploy a length of irrigation conduit on to the soil bed with the assistance of a series of translation rollers 110. This conduit is sandwiched between the soil bed and a layer of weed deterrent cover material supplied by a cover material reel 105. Cover material supplied by the cover material reel 105 is pressed into the soil bed by one of the compaction rollers 107 with the irrigation conduit located underneath the cover material.

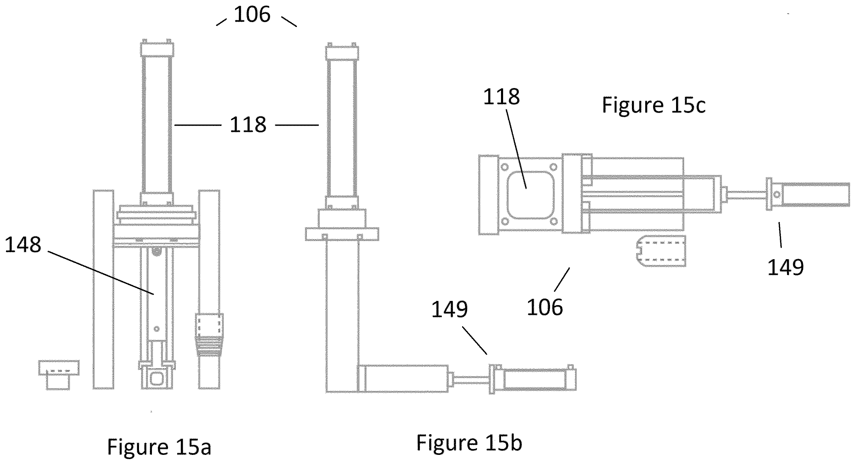

The apparatus 101 also includes a pair of spike hammers 106 with one shown by the side view provided as figure 10. The construction and operation of these components of the invention are shown and discussed in more detail respect to figures 15 to 18.

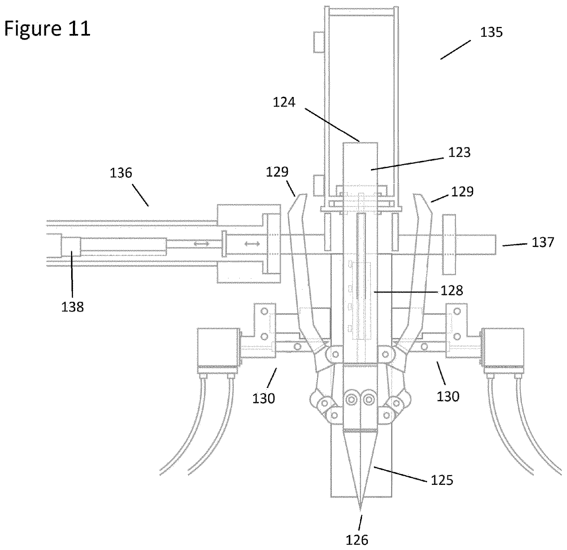

The final component of the apparatus mounted to the support frame 102 is a piercing assembly 108. The piercing assembly 108 and spike hammers 106 are connected to and powered by a pneumatic drive system which includes a series of accumulator tanks 109. The construction and operation of the piercing assembly 108 is shown and discussed in more detail with respect to figures 11 to 14.

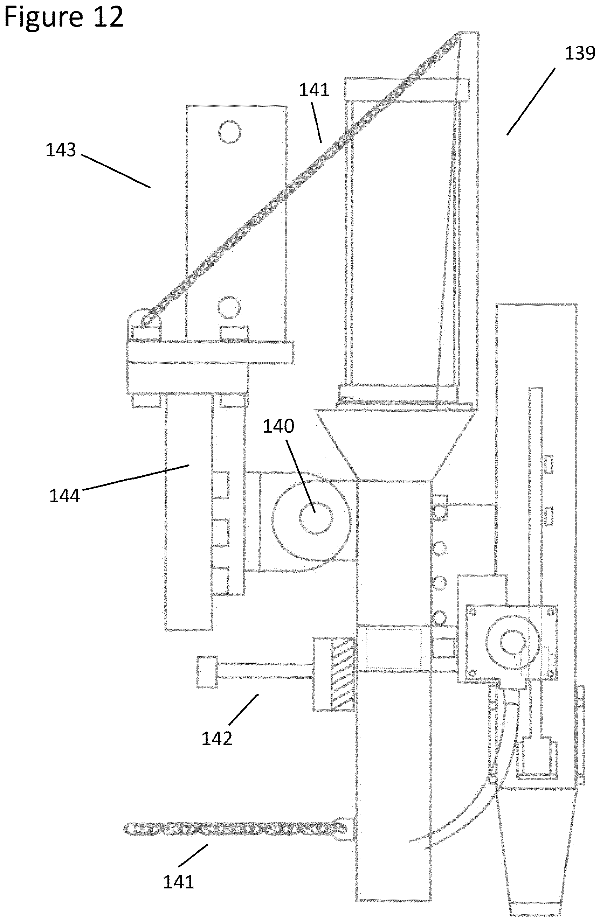

In particular, figure 11 shows an end view of the piercing assembly illustrated with respect to figure 10, while figure 12 shows a side view of the same piercing assembly. When used the piercing assembly 108 is arranged to form a series of holes in the sheet of cover material. These piercing operations are completed using a drive structure 135 configured to reciprocate the piercing assembly to drive one end of the piercing assembly through the sheet of cover material.

The piercing assembly defines a hollow bore 123 configured to receive at least one plant to be planted in the soil bed. Plants are fed into this hollow bore through an entry port 124.

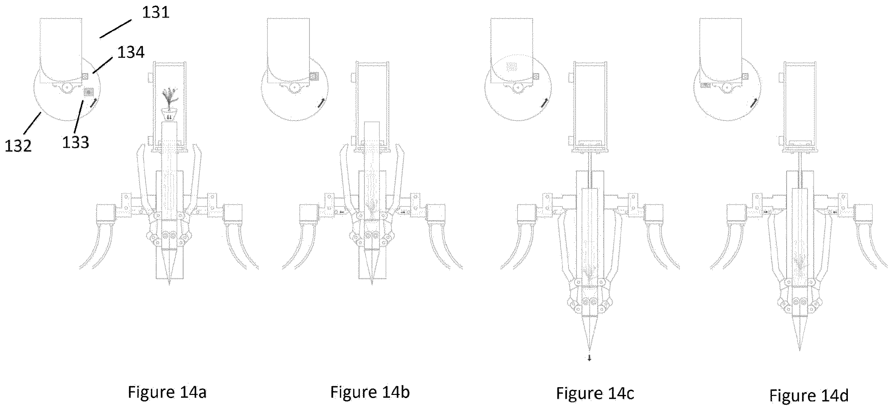

The end of the piercing assembly driven through the cover material defines a pair of jaws 125 which are movable between an open configuration and a closed configuration, as shown in further detail with respect to figures 14a through 14g. In the closed configuration shown in figure 11 the jaws define a piercing blade 126 which is driven through the sheet of cover material by the drive structure to form a planting hole in the underlying soil bed.

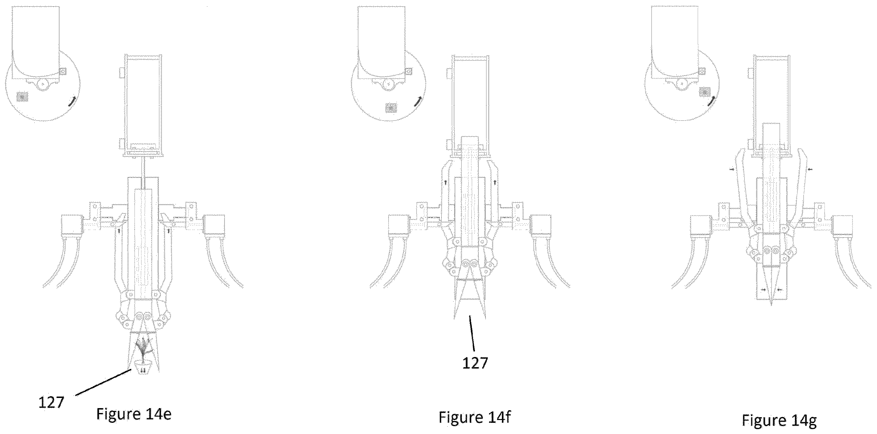

The drive structure 135 includes a pneumatic ram 128 assembly linked to the hollow bore 123 and terminating jaws 125. This ram is used to reciprocate the hollow bore and jaws up and down as shown with respect to figures 14a through 14g. The ram is used to rapidly force the bore downwards and the closed jaws through the cover material so that the action of gravity and the impact with the cover material and soil causes a plant within the hollow bore to move down the bore. The jaws are then moved into the open configuration to define a delivery port (not shown) which allows a plant located in the hollow bore to be delivered to the planting hole formed in soil bed through the hole formed in the cover material. Figure 14e shows the formation of this delivery port 127 when the jaws are opened.

Figures 11 and 12 also illustrate the provision of a lateral adjustment mechanism 136 which provides an intermediary component used to engage the piercing assembly 108 with the support frame 102. In the embodiment shown the piercing assembly and its associated drive structure 135 are suspended from a threaded shaft 137 linked to an electric drive motor 138.

Forward and backwards operation of this motor rotates the driveshaft to produce a lateral translation in the suspended piercing assembly. This feature therefore allows for precise adjustment of the relative position of the piercing assembly to the left and right on the support frame to adjust for deviations in the soil bed being traversed by the apparatus.

Figure 12 also shows the provision of a resilient tilt mounting 139 and a height adjustment mechanism 143 used as intermediary components to engage the piercing assembly 108 with the support frame 102. In the embodiment shown the resilient tilt mounting is engaged with and suspends the lateral adjustment mechanism discussed above. This component is in turn suspending by a pivot connection 140 from the height adjustment mechanism which is engaged directly with the support frame.

The height adjustment mechanism incorporates a further pneumatic ram assembly 144 which lifts or lowers the pivot connection 140 relative to the support frame. This feature therefore allows for precise adjustment of the relative height of the piercing assembly 108 on the support frame 102 to adjust for deviations in height of the soil bed being traversed by the apparatus. This feature can also be used to control the depth of the planting hole formed by the operation of the piercing assembly.

The resilient tilt mounting 139 utilises the pivot connection 140 to the height adjustment mechanism 143 in combination with spring returns 141 to minimize the length of a cut formed in the surface of the cover material as the apparatus moves forward along the length of a soil bed. A deformable braking and steading element is also provided, as implemented in this embodiment by rubber tipped stop 142.

As a piercing and planting operation is taking place the support frame is still moving forward along the length of the soil bed and will therefore drag the jaw of the hollow bore along the length of the cover material in front of where a plant has been deposited. This can inadvertently rip or cut a longer hole in the cover material than is desirable if the piercing assembly is rigidly mounted to the support frame. However the resilient tilt mounting allows the resistance experienced by the jaw as the apparatus moves forward to be translated into a backward tilting motion in the piercing assembly. Once the jaws are clear of the soil bed and cover material the return springs will draw the piercing assembly back into a substantially vertical orientation and ready for the next piercing operation. The rubber tipped stop 142 brakes the motion of the piercing assembly as it moves back to a vertical orientation, as well as steadying and damping down vibrations in the piercing assembly when used.

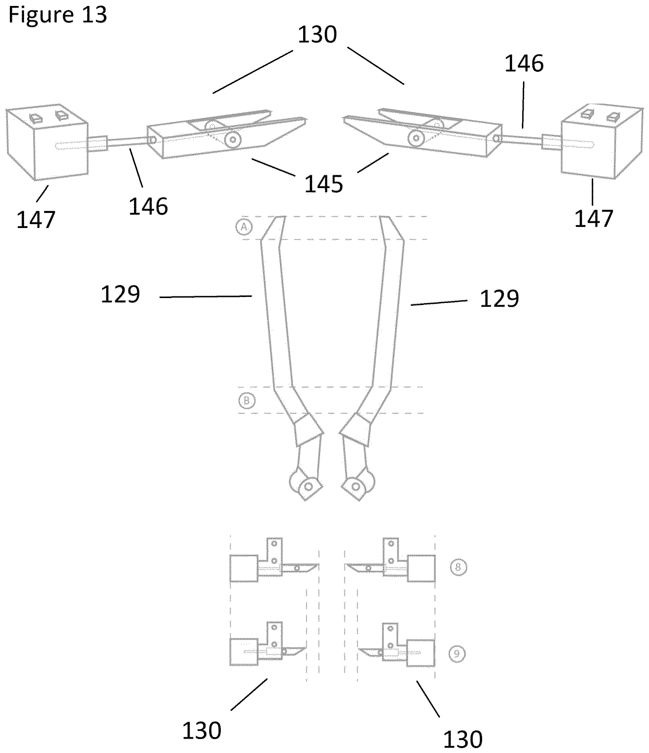

Figure 13 shows additional shuttle components 130 of the drive structure 135 which are used to open and close the jaws of the piercing assembly as the pneumatic ram assembly 128 reciprocates the hollow bore. This pair of shuttle components are each formed by a guide head 145 linked by a drive shaft 146 to a pneumatic ram drive assembly 147. Each guide head is linked to one of two lever arms 129 which are linked by a sequence of pivot connections to either side of the jaws. The ram 147 associated with each shuttle assembly is operated by control signals supplied by a trigger mechanism 131, formed in this embodiment by a magnetic sensor 134 mounted on the support frame 102 adjacent to a ground following wheel 132. This wheel has a magnet 133 mounted to it's side in a position where the magnet will rotate past the sensor with every revolution of the wheel.

Figures 14a through 14g illustrate the sequence of operational movements performed by the piercing assembly of figures 11-13 under the action of the drive mechanism and relative to the rotation of this ground following wheel based trigger mechanism 131.

Figure 14a (1) shows the initial positioning of the piercing assembly as a plant is dropped through the entry port of the hollow bore and as the trigger mechanism's wheel mounted magnet rotates into alignment with the sensor.

Figure 14b (2) shows the plant falling through the hollow bore under the action of gravity towards the jaws. At this stage of a piercing operation the rotating magnet is aligned with the sensor and a trigger signal is sent to each of the shuttle mechanisms to pull the guide heads away from the hollow bore and to activate the pneumatic ram to drive the hollow bore downwards. The guide heads of the shuttles are engaged with shoulder regions B of the lever arms as illustrated by figure 13.

Figure 14c (3) shows the pneumatic ram having driven the hollow bore and jaw downwards through a cover material to form a planting hole in the underlying soil bed. The guide heads of the shuttles are engaged with shoulder regions A of the lever arms as illustrated by figure 13.

Figure 14d (4) shows the guide heads beginning to be driven inwards towards the hollow bore and acting against shoulder regions A of the lever arms.

Figure 14e (5) shows the piercing assembly after the guide heads have moved inwards and pulled the lever arms inwards towards the hollow bore, forcing the jaws to move from their closed to open configurations. This allows the plant inside the hollow bore to drop out through the exit port defined by the open jaws through the pierced cover material and into the planting hole formed by the jaws.

Figure 14f (6) shows the operation of the pneumatic ram to lift the hollow bore upwards while the jaws remain in the open configuration. The upper sections of the tilt arms move past the guide heads of the shuttle mechanisms As discussed with reference to figure 12, the resilient tilt mounting provided with the piercing assembly allows it to tilt at this stage of the piercing operation to minimise the size of the hole formed in the cover material as the jaws are drawn upwards and away from the soil bed.

Figure 14g (7) shows a return to the starting configuration of the piercing assembly prior to the supply of a plant into the interior of the hollow bore. As can be seen from this figure the wheel mounted magnet is again about to rotate into alignment with the sensor to trigger another cycle of the piercing and planting operation completed by the apparatus.

Figures 15a, 15b and 15c show front, side and top views of one of the spike hammers 106 of the apparatus 101 shown with respect to figure 10. These figures show a number of views of one of the two spike hammers positioned on opposite sides of the support frame 102 and used to drive spikes through the cover material and into the soil bed.

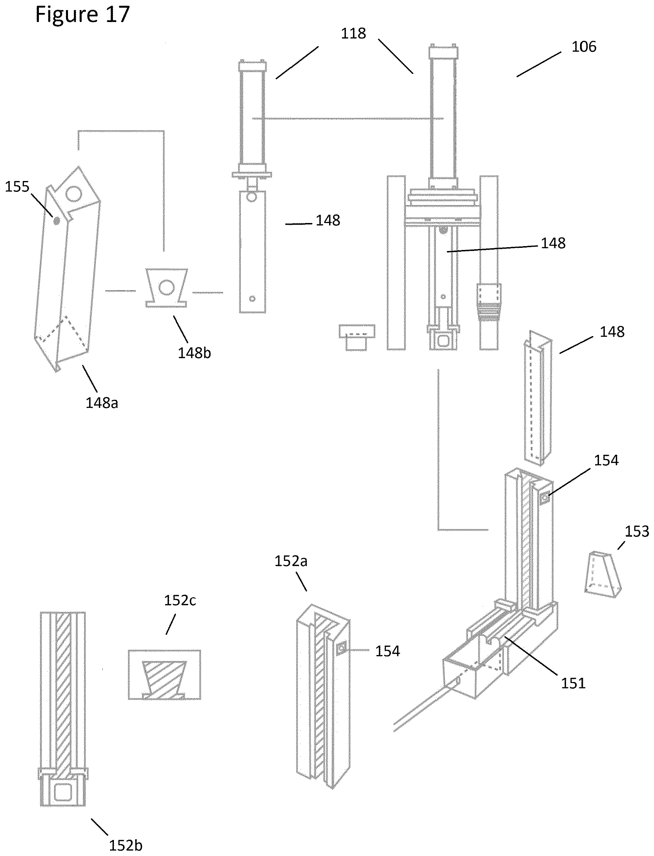

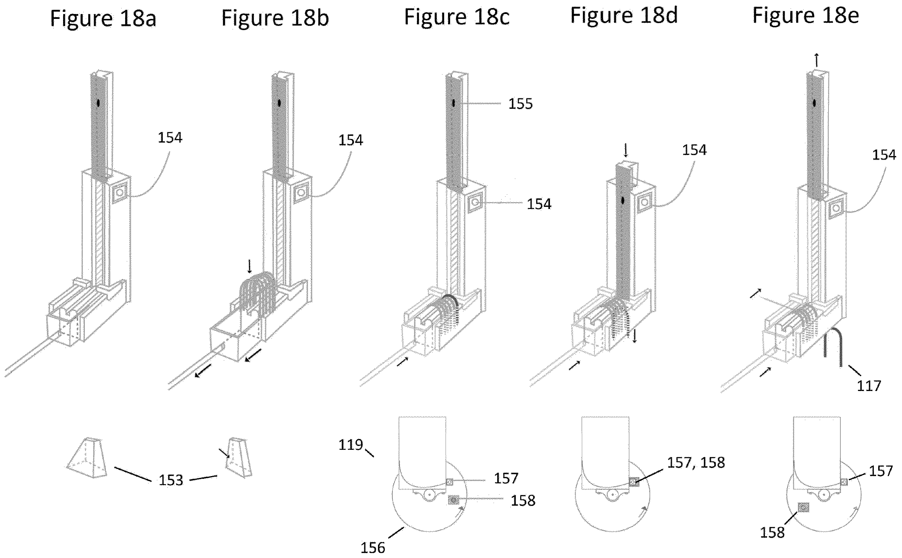

The spike hammer incorporates an actuation structure, which is formed in this embodiment by a hydraulic ram 118. This ram is configured to apply a driving force to a hammer element 148 which contacts the spike 117 to be driven through a sheet of cover material. The operation of the actuation structure is controlled by the components of a trigger mechanism 119, shown in further detail with respect to figures 17 and 18a through 18e.

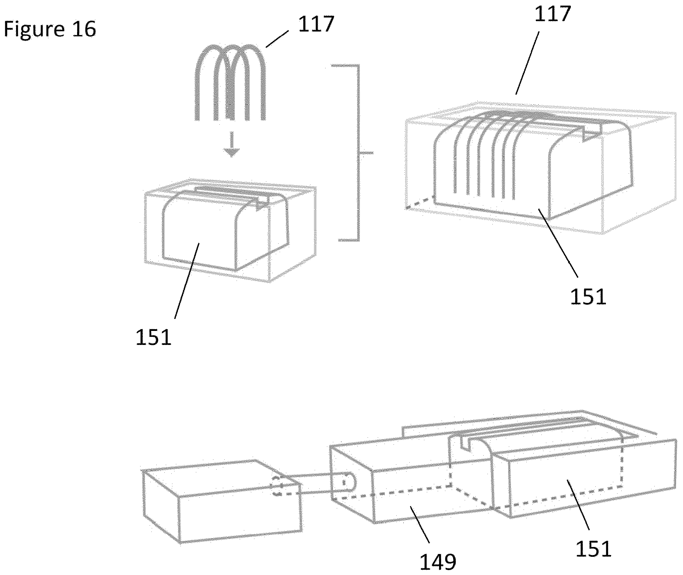

The spike hammer also includes a spike magazine drive system 149, as shown in further detail in figure 16. A magazine 151 of staple based spikes 117 is provided for use with the spike hammer, with a hydraulically driven pusher head 150 being provided to urge these spikes towards the end of the magazine and towards the hammer element.

Figure 17 show an exploded schematic view of parts of the spike hammer illustrated in figures 15a-c. These figures show the location of the hammer element 148 within a guide channel 152 which positions the top of the hammer element underneath the hydraulic ram 118. The hammer element is shown in perspective view 148a and top view 148b, while the guide channel is shown in perspective view 152a, front view 152b and top view 152c. The guide channel positions the bottom end of the hammer element adjacent to the spike magazine, allowing spikes to be introduced under the hammer element for subsequent driving through the cover material. Also shown is operator pedal 153 which allows for control of the spike magazine drive system shown with respect to figure 16.

These figures also show the provision of elements of the spike hammer trigger mechanism 119 which includes a magnetic sensor 154 mounted to the guide adjacent to a magnet 155 mounted to the front face of the hammer element. As illustrated by figures 18c, 18d and 18e, this trigger mechanism also includes a second magnetic sensor 157 mounted to the support frame adjacent to a ground following wheel 156 with a further magnet 158 mounted to the side of this wheel.

Figures 18a through 18e illustrate the sequence of operational movements performed by the spike hammer 106 of figures 15 through 17 relative to the rotation of a ground following wheel trigger mechanism 119.

Figure 18a shows the initial state of the spike magazine prior to the use of the apparatus. Figure 18b shows the loading of the spike magazine to ready the apparatus for use, with a user engaging the pedal to urge the loaded spikes towards the guide and hammer element.

Figure 18c shows the spike hammer ready for use with the ground following wheel 156 rotating the magnet 158 into proximity with the sensor 157.

Magnetic sensor 154 mounted to the guide does not detect the presence of magnet 155 mounted to the hammer element, indicating that the hammer element is located in the raised position shown in figures 18a-c and 18e.

Figure 18d shows the activation of the pneumatic ram 118 by a control signal issued from the magnet sensor 157 determining the magnet 158 is rotating past it. The bottom end of the hammer element is rapidly moved into contact with the adjacent spike and drives it through a sheet of weed mat. Magnetic sensor 154 detects the presence of magnet 155 mounted near the top of the hammer element and indicates that the hammer element is in the lowered position shown with respect to figure 18d.

Figure 18e shows the spike hammer being reset for another operational cycle after the magnet has rotated past the sensor. The spike has been driven into the cover material and is falling behind the apparatus as it moves forward. The spike magazine drive system urges the next adjacent spike into the guide while the hammer element is drawn upwards by the pneumatic ram, with the system arriving back at the same configuration shown with respect to figure 18c.

In the preceding description and the following claims the word "comprise" or equivalent variations thereof is used in an inclusive sense to specify the presence of the stated feature or features. This term does not preclude the presence or addition of further features in various embodiments.

The invention may reside in any combination of features described herein, or may reside in alternative embodiments or combinations of these features with known equivalents to given features. Modifications and variations of the example embodiments of the invention discussed above will be apparent to those skilled in the art and may be made without departure of the scope of the invention as defined in the appended claims.

## Claims

1. A soil bed covering and planting apparatus (1, 101) adapted to be carried along the length of a soil bed by a conveyer vehicle, the apparatus including
a cover material reel (5, 105) configured to retain and supply a sheet of cover material, and
a compaction roller (7, 107, 6) configured to feed cover material supplied by the cover material reel (5, 105) over a soil bed and being configured to press the cover material on to the soil bed, and a piercing assembly (8, 108) arranged to form a series of holes in the sheet of cover material, the piercing assembly (8, 108) being engaged with a drive structure (135) which is configured to reciprocate the piercing assembly (8, 108) to drive one end of the piercing assembly (8, 108) through the sheet of cover material,
**characterized in that**
the apparatus (1, 101) includes two spike hammers (6, 7,106) positioned adjacent to and at opposite sides of the compaction roller (7, 107,6), each being configured to drive at least one spike (117) through the cover material and into the soil bed to secure the cover material to the soil bed, and
an actuation structure (18) associated with each spike hammer (6, 7, 106) configured to urge the spike hammer (6, 7, 106) against the at least one spike (117).

2. A soil bed covering and planting apparatus (1, 101) as claimed in claim 1 wherein the piercing assembly (8, 108) defines a hollow bore configured to receive at least one plant to be planted in the soil bed, the piercing assembly (8, 108) also defining an entry port (124) through which a plant can be introduced to the hollow bore.

3. A soil bed covering and planting apparatus (1, 101) as claimed in claim 2 wherein the end of the piercing assembly (8, 108) driven through the cover material defines a pair of jaws (25, 125) movable between an open configuration and a closed configuration, wherein in the closed configuration the jaws (25, 125) define a piercing blade (26, 126) and in the open configuration the jaws define a delivery port (27, 127) which allows a plant located in the hollow bore to exit the bore and be delivered to the soil bed through a hole formed in the cover material by the piercing assembly (8, 108).

4. A soil bed covering and planting apparatus (1, 101) as claimed in claim 3 wherein the drive structure (135) is configured to move the piercing assembly (8, 108) so that one end of the assembly is driven through the sheet of cover material to form a planting hole in the underlying soil bed with action of gravity and/or the impact of the lower end of the piercing assembly (8, 108) with the cover material and soil bed causing a plant introduced into the hollow bore to move down the bore.

5. A soil bed covering and planting apparatus (1, 101) as claimed in claim 1 wherein the drive structure (135) is associated with a trigger mechanism (19, 31, 131) which includes a magnetic sensor (134, 154, 157) and a ground following wheel (132, 156) incorporating a number of magnets (133, 155, 158) mounted on a side of the wheel (132, 156), the magnets (133, 155, 158) being positioned to rotate past a magnetic sensor (134, 154, 157).

6. A soil bed covering and planting apparatus (1, 101) as claimed in claim 1 wherein the drive structure (135) configured to reciprocate the piercing assembly (8, 108) includes at least one pneumatic ram (30, 118).

7. A soil bed covering and planting apparatus (1, 101) as claimed in claim 1 which includes a support frame (2, 102) and the piercing assembly (8, 108) is engaged with the support frame (2, 102) through a lateral adjustment mechanism (136).

8. A soil bed covering and planting apparatus (1, 101) as claimed in claim 1 which includes a support frame (2, 102) and the piercing assembly (8, 108) engaged with the support frame (2, 102) through a height adjustment mechanism (143).

9. A soil bed covering and planting apparatus (1, 101) as claimed in claim 1 which includes a support frame (2, 102) and the piercing assembly (8, 108) engaged with the support frame (2, 102) using a resilient tilt mounting (139).

10. A soil bed covering and planting apparatus (1, 101) as claimed in claim 1 wherein the actuation structure (18) associated with at least one of the spike hammers (6, 7, 106) includes a pneumatic ram assembly (128, 144).

11. A soil bed covering and planting apparatus (1, 101) as claimed in claim 1 wherein the actuation structure (18) associated with at least one of the spike hammers (6, 7, 106) includes a trigger mechanism (19, 31, 131) which incorporates a ground travelling wheel (20, 32) rotated by the progress of the conveyor vehicle.

12. A soil bed covering and planting apparatus (1, 101) as claimed in claim 1 wherein the compaction roller (7, 107, 6) defines a ground contact profile which is complementary to the profile of the soil bed to be prepared.

13. A soil bed covering and planting apparatus (1, 101) as claimed in claim 12 wherein the compaction roller (7, 107, 6) has a cylindrical form with a tapered central waist which complements the shape of a ridged soil bed.

14. A soil bed covering and planting apparatus (1, 101) as claimed in claim 1 which includes a ridging structure (3, 103) configured to form a raised ridge of soil as the conveyor vehicle moves along the length of a soil bed.

15. A soil bed covering and planting apparatus (1, 101) as claimed in claim 1 which includes an irrigation conduit reel (4, 104) configured to retain and supply a length of irrigation conduit over the soil bed and under the cover material.

## Patentansprüche

1. Eine Bodenbettabdeckungs- und Bepflanzungsvorrichtung (1,101), die dazu angepasst ist, von einem Förderfahrzeug entlang der Länge eines Bodenbetts getragen zu werden, die Vorrichtung umfassend
eine Abdeckmaterialtrommel (5,105), die dazu eingerichtet ist, eine Schicht Abdeckmaterial zu halten und zuzuführen, und
eine Verdichtungswalze (7, 107, 6), die dazu eingerichtet ist, Abdeckmaterial, das von der Abdeckmaterialtrommel (5, 105) zugeführt wird, über ein Bodenbett zu befördern, und die dazu eingerichtet ist, das Abdeckmaterial auf das Bodenbett zu pressen, und eine Durchstoßanordnung (8, 108), die so angeordnet ist, dass sie eine Reihe von Löchern in der Schicht des Abdeckmaterials bildet, wobei die Durchstoßanordnung (8, 108) mit einer Antriebsstruktur (135) in Eingriff steht, die dazu eingerichtet ist, die Durchstoßanordnung (8, 108) hin und her zu bewegen, um ein Ende der Durchstoßanordnung (8, 108) durch die Schicht des Abdeckmaterials zu treiben,
**dadurch gekennzeichnet, dass**
die Vorrichtung (1, 101) zwei Stachelhämmer (6, 7, 106) umfasst, die neben und auf gegenüberliegenden Seiten der Verdichtungswalze (7, 107, 6) angeordnet sind, wobei jeder so konfiguriert ist, dass er mindestens einen Stachel (117) durch das Abdeckmaterial und in das Bodenbett treibt, um das Abdeckmaterial am Bodenbett zu sichern, und
eine Betätigungsstruktur (18), die jedem Stachelhammer (6, 7, 106) zugehörig ist und dazu eingerichtet ist, den Stachelhammer (6, 7, 106) gegen
den mindestens einen Stachel (117) zu drücken.

2. Eine Bodenbettabdeckungs- und Bepflanzungsvorrichtung (1, 101) nach Anspruch 1, wobei die Durchstoßanordnung (8, 108) eine Hohlbohrung definiert, die dazu eingerichtet ist, mindestens eine in das Bodenbett zu pflanzende Pflanze aufzunehmen, wobei die Durchstoßanordnung (8, 108) auch eine Eintrittsöffnung (124) definiert, durch die eine Pflanze in die Hohlbohrung eingeführt werden kann.

3. Eine Bodenbettabdeckungs- und Bepflanzungsvorrichtung (1,101) nach Anspruch 2, wobei das Ende der Durchstoßanordnung (8, 108), das durch das Abdeckmaterial getrieben wird, ein Paar von Backen (25, 125) definiert, die zwischen einer offenen Konfiguration und einer geschlossenen Konfiguration beweglich sind, wobei die Backen (25, 125) in der geschlossenen Konfiguration eine Durchstoßklinge (26, 126) definieren und in der offenen Konfiguration eine Zufuhröffnung (27,127) definieren, die es einer in der Hohlbohrung befindlichen Pflanze ermöglicht, die Bohrung zu verlassen und durch ein von der Durchstoßanordnung (8, 108) in dem Abdeckmaterial gebildetes Loch in das Bodenbett zugeführt zu werden.

4. Eine Bodenbettabdeckungs- und Bepflanzungsvorrichtung (1, 101) nach Anspruch 3, wobei die Antriebsstruktur (135) dazu eingerichtet ist, die Durchstoßanordnung (8, 108) zu bewegen, so dass ein Ende der Anordnung durch die Schicht des Abdeckmaterials getrieben wird, um ein Bepflanzungsloch in dem darunter liegenden Bodenbett mit Hilfe der Schwerkraft und/oder dem Aufprall des unteren Endes der Durchstoßanordnung (8, 108) auf das Abdeckmaterial und das Bodenbett auszubilden, wodurch eine in die Hohlbohrung eingeführte Pflanze dazu gebracht wird, sich der Bohrung entlang nach unten zu bewegen?

5. Eine Bodenbettabdeckungs- und Bepflanzungsvorrichtung (1, 101) nach Anspruch 1, wobei die Antriebsstruktur (135) einem Auslösemechanismus (19, 31, 131) zugeordnet ist, der einen magnetischen Sensor (134, 154, 157) und ein dem Boden folgendes Rad (132, 156) umfasst, das eine Anzahl von Magneten (133, 155, 158) beinhaltet, die an einer Seite des Rades (132, 156) angebracht sind, wobei die Magnete (133, 155, 158) so positioniert sind, dass sie an einem magnetischen Sensor (134, 154, 157) vorbeidrehen.

6. Eine Bodenbettabdeckungs- und Bepflanzungsvorrichtung (1, 101) nach Anspruch 1, wobei die Antriebsstruktur (135), eingerichtet zum Hin- und Herbewegen der Durchstoßanordnung (8, 108), mindestens einen pneumatischen Stößel (30, 118) umfasst.

7. Eine Bodenbettabdeckungs- und Bepflanzungsvorrichtung (1, 101) nach Anspruch 1, die einen Tragrahmen (2, 102) umfasst und die Durchstoßanordnung (8, 108) über einen lateralen Anpassungsmechanismus (136) mit dem Tragrahmen (2, 102) in Eingriff steht.

8. Eine Bodenbettabdeckungs- und Bepflanzungsvorrichtung (1, 101) nach Anspruch 1, die einen Tragrahmen (2, 102) umfasst und die Durchstoßanordnung (8, 108) mit dem Tragrahmen (2, 102) über einen Höhenanpassungsmechanismus (143) in Eingriff steht.

9. Eine Bodenbettabdeckungs- und Bepflanzungsvorrichtung (1, 101) nach Anspruch 1, die einen Tragrahmen (2, 102) umfasst und die Durchstoßanordnung (8, 108) mit dem Tragrahmen (2, 102) mittels einer federnden Kipphalterung (139) in Eingriff steht.

10. Eine Bodenbettabdeckungs- und Bepflanzungsvorrichtung (1, 101) nach Anspruch 1, wobei die Betätigungsstruktur (18), zugehörig zu mindestens einem der Stachelhämmer (6, 7, 106), eine pneumatische Stößelanordnung (128, 144) umfasst.

11. Eine Bodenbettabdeckungs- und Bepflanzungsvorrichtung (1, 101) nach Anspruch 1, wobei die Betätigungsstruktur (18), zugehörig zu mindestens einem der Stachelhämmer (6, 7, 106), einen Auslösemechanismus (19, 31, 131) umfasst, der ein Bodenlaufrad (20, 32) umfasst, das durch den Fortschritt des Förderfahrzeugs gedreht wird.

12. Eine Bodenbettabdeckungs- und Bepflanzungsvorrichtung (1, 101) nach Anspruch 1, wobei die Verdichtungswalze (7, 107, 6) ein Bodenkontaktprofil definiert, das komplementär zu dem Profil des zu präparierenden Bodenbetts ist.

13. Eine Bodenbettabdeckungs- und Bepflanzungsvorrichtung (1, 101) nach Anspruch 12, wobei die Verdichtungswalze (7, 107, 6) eine zylindrische Form mit einer sich verjüngenden zentralen Taille aufweist, die die Form eines gerippten Bodenbetts ergänzt.

14. Eine Bodenbettabdeck- und Bepflanzungsvorrichtung (1, 101) nach Anspruch 1, die eine Dammstruktur (3, 103) umfasst, die dazu eingerichtet ist, einen erhöhten Damm aus Erde zu bilden, wenn das Förderfahrzeug sich entlang der Länge eines Bodenbetts bewegt.

15. Eine Bodenbettabdeck- und Bepflanzungsvorrichtung (1, 101) nach Anspruch 1, die eine Bewässerungsleitungstrommel (4, 104) umfasst, die dazu eingerichtet ist, eine Länge der Bewässerungsleitung über dem Bodenbeet und unter dem Abdeckmaterial zu halten und zuzuführen.

## Revendications

1. Appareil de couverture de lit de sol et de plantation (1, 101) adapté à être porté le long de la longueur d'un lit de sol par un véhicule transporteur, l'appareil incluant
une bobine de matériau de couverture (5, 105) configurée pour retenir et fournir une feuille de matériau de couverture, et
un compacteur (7, 107, 6) configuré pour alimenter du matériau de couverture fourni par la bobine de matériau de couverture (5, 105) sur un lit de sol et étant configuré pour presser le matériau de couverture sur le lit de sol, et
un ensemble de perçage (8, 108) agencé pour former une série de trous dans la feuille de matériau de couverture, l'ensemble de perçage (8, 108) étant engagé avec une structure d'entraînement (135) qui est configurée pour faire aller et venir l'ensemble de perçage (8, 108) pour entraîner une extrémité de l'ensemble de perçage (8, 108) à travers la feuille de matériau de couverture,
**caractérisé en ce que**
l'appareil (1, 101) inclut deux marteaux à pointe (6, 7, 106) positionnés de manière adjacente à et sur des côtés opposés du compacteur (7, 107, 6), chacun étant configuré pour entraîner au moins une pointe (117) à travers le matériau de couverture et dans le lit de sol pour fixer le matériau de couverture au lit de sol, et
une structure d'actionnement (18) associée à chaque marteau à pointe (6, 7, 106), configurée pour pousser le marteau à pointe (6, 7, 106) contre l'au moins une pointe (117).

2. Appareil de couverture de lit de sol et de plantation (1, 101) selon la revendication 1, dans lequel l'ensemble de perçage (8, 108) définit un alésage creux configuré pour recevoir au moins une plante devant être plantée dans le lit de sol, l'ensemble de perçage (8, 108) définissant également un port d'entrée (124) à travers lequel une plante peut être introduite dans l'alésage creux.

3. Appareil de couverture de lit de sol et de plantation (1, 101) selon la revendication 2, dans lequel l'extrémité de l'ensemble de perçage (8, 108) entraînée à travers le matériau de couverture définit une paire de mâchoires (25, 125) mobiles entre une configuration ouverte et une configuration fermée, dans lequel dans la configuration fermée, les mâchoires (25, 125) définissent une lame de perçage (26, 126) et dans la configuration ouverte, les mâchoires définissent un port de distribution (27, 127) qui permet à une plante située dans l'alésage creux de sortir de l'alésage et d'être distribuée au lit de sol à un travers un trou formé dans le matériau de couverture par l'ensemble de perçage (8, 108).

4. Appareil de couverture de lit de sol et de plantation (1, 101) selon la revendication 3, dans lequel la structure d'entraînement (135) est configurée pour déplacer l'ensemble de perçage (8, 108) de sorte qu'une extrémité de l'ensemble est entraînée à travers la feuille de matériau de couverture pour former un trou de plantation dans le lit de sol sous-jacent avec l'action de la gravité et/ou l'impact de l'extrémité inférieure de l'ensemble de perçage (8, 108) avec le matériau de couverture et le lit de sol amenant une plante introduite dans l'alésage creux à se déplacer vers le bas de l'alésage.

5. Appareil de couverture de lit de sol et de plantation (1, 101) selon la revendication 1, dans lequel la structure d'entraînement (135) est associée à un mécanisme de déclenchement (19, 31, 131) qui inclut un capteur magnétique (134, 154, 157) et une roue de suivi de sol (132, 156) incorporant un certain nombre d'aimants (133, 155, 158) montés sur un côté de la roue (132, 156), les aimants (133, 155, 158) étant positionnés pour tourner devant un capteur magnétique (134, 154, 157).

6. Appareil de couverture de lit de sol et de plantation (1, 101) selon la revendication 1, dans lequel la structure d'entraînement (135) configurée pour faire aller et venir l'ensemble de perçage (8, 108) inclut au moins une dame pneumatique (30, 118).

7. Appareil de couverture de lit de sol et de plantation (1, 101) selon la revendication 1, qui inclut un cadre de support (2, 102) et l'ensemble de perçage (8, 108) est engagé avec le cadre de support (2, 102) à travers un mécanisme d'ajustement latéral (136).

8. Appareil de couverture de lit de sol et de plantation (1, 101) selon la revendication 1, qui inclut un cadre de support (2, 102) et l'ensemble de perçage (8, 108) engagé avec le cadre de support (2, 102) à travers un mécanisme d'ajustement de hauteur (143).

9. Appareil de couverture de lit de sol et de plantation (1, 101) selon la revendication 1, qui inclut un cadre de support (2, 102) et l'ensemble de perçage (8, 108) engagé avec le cadre de support (2, 102) en utilisant un support à basculement résilient (139).

10. Appareil de couverture de lit de sol et de plantation (1, 101) selon la revendication 1, dans lequel la structure d'actionnement (18) associée à au moins un des marteaux à pointe (6, 7, 106) inclut un ensemble de dame pneumatique (128, 144).

11. Appareil de couverture de lit de sol et de plantation (1, 101) selon la revendication 1, dans lequel la structure d'actionnement (18) associée à au moins un des marteaux à pointe (6, 7, 106) inclut un mécanisme de déclenchement (19, 31, 131) qui incorpore une roue de déplacement au sol (20, 32) tournée par la progression du véhicule transporteur.

12. Appareil de couverture de lit de sol et de plantation (1, 101) selon la revendication 1, dans lequel le compacteur (7, 107, 6) définit un profil de contact avec le sol qui est complémentaire au profil du lit de sol devant être préparé.

13. Appareil de couverture de lit de sol et de plantation (1, 101) selon la revendication 12, dans lequel le compacteur (7, 107, 6) a une forme cylindrique avec une taille centrale effilée qui complète la forme d'un lit de sol butté.

14. Appareil de couverture de lit de sol et de plantation (1, 101) selon la revendication 1, qui inclut une structure de buttage (3, 103) configurée pour former une butte surélevée de sol à mesure que le véhicule transporteur se déplace le long de la longueur d'un lit de sol.

15. Appareil de couverture de lit de sol et de plantation (1, 101) selon la revendication 1, qui inclut une bobine de conduite d'irrigation (4, 104) configurée pour retenir et fournir une longueur de conduite d'irrigation sur le lit de sol et sous le matériau de couverture.
